# NEUE EUROPÄISCHE PATENTSCHRIFT

(11) **EP 0 670 148 B2**
(45) Veröffentlichungstag und Bekanntmachung des Hinweises auf die Entscheidung über den Einspruch: **23.04.2003**
(45) Hinweis auf die Patenterteilung: 20.01.1999
(21) Anmeldenummer: 95102432.2
(22) Anmeldetag: 21.02.1995
(51) Int. Cl.: A61C 1/08, A61C 1/06, A61B 17/16

(54) **Motorhandstück, insbesondere für medizinische Zwecke, vorzugsweise für ein medizinisches oder dentales Labor**
Motor driven hand piece, in particular for medical applications, preferably for a medical or dental laboratory
Pièce à main motorisée, en particulier pour des fins médicales, de préférence pour un laboratoire médical ou dentaire

(30) Priorität: 02.03.1994 DE 4406854
(43) Veröffentlichungstag der Anmeldung: 06.09.1995
(73) Patentinhaber: KALTENBACH & VOIGT GMBH & CO., 88400 Biberach (DE)
(72) Erfinder: Düsing, Josef, D-88299 Leutkirch (DE)
(74) Vertreter: Schmidt-Evers, Jürgen, Dipl.-Ing.

(56) Entgegenhaltungen:
- EP-A- 0 581 037
- DE-A- 2 132 891
- GB-A- 2 118 837
- DUBBEL "Taschenbuch für den Maschinenbau", 17. Auflage 1990
- Hauptkatalog Ulmer / SNR Ausgabe CGD 2 91/7060, Seiten 27, 28
- Katalog SKF Dd 4000 X, Juli 1965, Registriernummer 1521, Seiten 40-43, 82, 83

## Beschreibung

Die Erfindung bezieht sich auf ein gerades Motorhandstück nach dem Oberbegriff des Anspruchs 1.

Ein Handstück der vorliegenden Art eignet sich insbesondere für solche mechanischen Bearbeitungen von natürlichen oder künstlichen Teilen des menschlichen oder tierischen Körpers, bei denen eine verhältnismäßig große Antriebs- und Arbeitsleistung gefordert ist. Für den ärztlichen Bereich eignet sich ein solches Handstück deshalb insbesondere für die Bearbeitung verhältnismäßig fester Körperteile. Im dentalen Bereich läßt sich ein solches Handstück dann im Mundraum eines Patienten zur Zahnbehandlung einsetzen, wenn es von einer entsprechend Kieinen Bauweise ist.

Ein vorliegendes Handstück eignet sich vorzugsweise für ein medizinisches, insbesondere dentales Labor, in dem insbesondere künstliche Körperteile oder Modelle spanabhebend mittels in das Handstück einspannbarer Werkzeuge drehender Funktion bearbeitet werden. Das Handstück eignet sich zur Übertragung einer verhältnismäßig großen Arbeitsleistung auf das Werkzeug und es lassen sich unterschiedliche Werkzeuge handhabungsfreundlich und schnell spannen bzw. lösen und austauschen.

Ein bedeutendes Problem bei einem vorliegenden Motorhandstück besteht darin, daß insbesondere das vordere Wälzlager durch Eindringen von Schmutz aus dem Arbeitsbereich in das Motorhandstück verschmutzt wird und dadurch die Lebensdauer durch Verschleiß beeinträchtigt wird. Dies gilt insbesondere dann, wenn das Motorhandstück zum Bearbeiten, insbesondere Schleifen, von Keramik oder Metall eingesetzt wird, wobei der Werkstoffabtrag, insbesondere Staub, durch das vordere Ende des Motorhandstücks zum vorderen Lager hin wandert und in dieses eindringt. Solche Belastungen für das Motorhandstück ergeben sich insbesondere bei dessen Einsatz in einem medizinischen oder dentalen Labor.

Eine andere Ursache des Eindringens von Verunreinigungen in das vordere Lager des Motorhandstücks besteht in der üblichen Maßnahme, den vorderen Endbereich des Motorhandstücks zum Zwecke der erforderlichen Reinigung mit Druckluft auszublasen, wobei der Materialabtrag durch die Druckluft zum Lager gelangt.

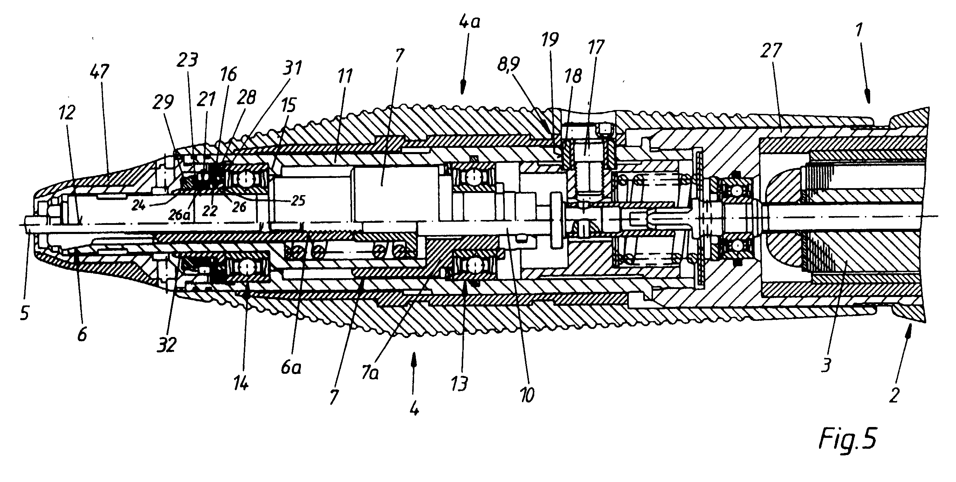

Um das Lager zu schützen, wurde bereits ein Dichtsystem entwickelt, das vor dem Lager eingebaut ist. Ein solches Handstück der eingangs beschriebenen Art wird von der Anmelderin unter der Bezeichnung K9-Handstück Type 950 auf dem Markt vertrieben und ist somit bekannt. Im folgenden wird dieses Handstück anhand einer beigefügten Fig. 5 beschrieben.

Das stabförmige, gerade Handstück 1 besteht aus einem hinteren, nur teilweise dargestellten Motorteil 2 mit einem darin eingebauten, insbesondere elektrischen Antriebsmotor 3 und einem vorderen Handstückteil 4, in das von vorne ein Bearbeitungswerkzeug mit seinem Schaft 5 einspannbar ist. Hierzu dient eine koaxial im Handstückteil 4 angeordnete hülsenförmige, geschlitzte Spannzange 6 die Teil einer Antriebswelle 7 ist, die koaxial im Handstückteil 4 drehbar gelagert ist und mit dem Antriebsmotor 3 zu ihrer Rotation verbunden ist. Die Spannzange 6 läßt sich durch eine Relativverdrehung zwischen dem Motorteil 2 und einer Griffhülse 4a des Handstückteil 4 öffnen und schließen. Hierzu ist in das Handstückteil 4 ein Betätigungsmechanismus 8 integriert, der zwischen der Griffhülse 4a und der Antriebswelle 7 wirksam ist und ein Getriebe 9 aufweist, das die Drehbewegung der Griffhülse 4a in eine Axialbewegung einer runden Anzugstange 10 umwandelt, die sich von hinten koaxial durch eine Lagerhülse 7a der Antriebswelle 7 erstreckt, darin axial beweglich in einer Bohrung gelagert ist und mit ihrem vorderen Ende in ein Innengewinde 6a der Spannzange 6 eingeschraubt ist. Die Griffhülse 4a ist auf einem hülsenförmigen Innengehäuse 11 um die Längsmittelachse 12 des Handstücks 1 drehbar und längs verschiebbar gelagert. Im Innengehäuse 11 ist die Antriebswelle 7 mittels zwei einen axialen Abstand voneinander aufweisenden Wälzlagern 13, 14 drehbar gelagert, von denen das vordere Wälzlager 14 mit seiner Hinterseite an einer Innenringschulter 15 des Innengehäuses 11 anliegt, wobei der Außenring des Wälzlagers 14 durch eine Mutter 16 gegen die Innenringschulter 15 festgeschraubt ist. Die Mutter 16 ist in ein Innengewinde am vorderen Ende des Innengehäuses 11 eingeschraubt. Vor der Mutter 16 ist außerdem eine Frontkappe 47 in das Innengewinde eingeschraubt, die die etwa hälftig vom Innengehäuse 11 hervorragende Spannzange 6 abdeckt.

Bei diesem bekannten Motorhandstück 1 ist ein mehrgliedriges Dichtsystem 21 dem vorderen Wälzlager 14 vorgeordnet, in das die Mutter 16 als Teil des Dichtsystems 21 einbezogen ist. Das Dichtsystem 21 weist zwei Dichtscheiben 22, 23 auf, die in einem axialen Abstand voneinander angeordnet und zwischen der Mutter 16 und einem zusätzlichen Dichtflächenring 24 wirksam sind, der unmittelbar vor dem Wälzlager 14 bei Anlage an dessen Vorderseite auf dem hülsenförmigen Abschnitt der Lagerwelle 7 fest aufgeschoben ist, der auch das Wälzlager 14 trägt. Der Dichttlächenring 24 weist an seinem hinteren Ende einen radial abstehenden Flansch 25 auf, der an seiner Vorderseite eine Dichtfläche 26 bildet. Der von dem Flansch 25 nach vorne ragende Abschnitt des Dichtflächenrings 24 ist mit einer zweiten, durch die Umfangsfläche gebildeten zylindrischen Dichtfläche 26a ausgebildet. Die erste Dichtscheibe 22 sitzt unbeweglich in einer Innennut 28 der Mutter 16, und sie liegt mit ihrer Hinterseite an der Dichtfläche 26 des Flansches 25 an. Die zweite Dichtscheibe 23 liegt an der Vorderseite der Mutter 16 an, wobei sie auf der Dichtfläche 26a gleitet und durch einen Klemmring 29 in Form eines sogenannten Quadringes in ihrer Funktionsstellung gehalten ist. Die Innennut 28 ist durch einen in die Mutter 16 eingesetzten und daran befestigten Innenring 31 gebildet.

Diese bekannte Ausgestaltung ist kompliziert sowie vielgliedrig und deshalb teuer in der Herstellung. Außerdem ist ein beträchtlicher Montage- und Zeitaufwand erforderlich, um das bekannte Dichtsystem zu montieren bzw. zu demontieren. Ferner ist das bekannte Dichtsystem von verhältnismäßig großer Bauweise, was auch zu einer größeren Bauweise des Motorhandstücks führt.

Ein weiterer Nachteil des bekannten Dichtsystems ist darin zu sehen, daß bei einer Verlagerung des Klemmrings 29, was ggf. unter der Wirkung von Druckluft nicht ausgeschlossen werden kann, die zweite Dichtscheibe 23 unterschiedlich stark gedrückt werden kann, wodurch entweder ihre Dichtfunktion beeinträchtigt wird, so daß mit einer Verschlechterung der Dichtung zu rechnen ist oder ihr Gleitsitz im Sinne eines festeren Sitzes beeinträchtigt wird, so daß mit einer erheblichen Erwärmung im Betrieb und Verschleiß zu rechnen ist.

Wälzlager mit verschiedenen Dichtsystemen kommen auf vielen technischen Gebieten zum Einsatz und werden beispielsweise von den Firmen Gebrüder Ulmer GmbH & Co. oder SKF vertrieben. Kataloge dieser beiden Firmen beschreiben eine Vielzahl unterschiedlich ausgebildeter Kugellager mit für den jeweiligen Anwendungszweck ausgebildeten Dichtsystemen. Für den Einsatz in stark schmutzhaltiger Umgebung werden dabei vorzugsweise Dichtungen vom sog. Typ E32 verwendet, die aus zwei umgekehrt angeordneten Nitrildichtungen mit jeweils einer dünnen Dichtlippe bestehen, die in die Lagerringe integriert werden. Das Taschenbuch für den Maschinenbau, Dubbel, 17. Auflage beschreibt ebenfalls verschiedene Möglichkeiten zum Abdichten von Wälzlagern. Je nach Anwendungsgebiet können sog. Labyrinthdichtungen, federnde Dichtscheiben, Spaltdichtungen mit Fettrillen, Gleitdichtungen aus Kunstkohle oder Metall, Radialdichtringe oder Filzringe verwendet werden. Bei den drei letztgenannten Alternativen handelt es sich um verschleißbehaftete schleifende Dichtungen, deren Dichtwirkung mit der Zeit nachläßt und die dementsprechend nach einer gewissen Laufzeit ausgetauscht werden müssen.

Der Erfindung liegt die Aufgabe zugrunde, ein Motorhandstück der eingangs angegebenen Art so auszugestalten, daß dessen Abdichtung bei Gewährleistung einer kleinen Bauweise verbessert wird.

Diese Aufgabe wird durch die Merkmale des Anspruchs 1 gelöst.

Beim erfindungsgemäßen Motorhandstück ist das Dichtsystem wenigstens teilweise in das Wälzlager zwischen dessen Innen- und Außenring integriert und zwar in dessen vorderen Endbereich. Die zusätzlichen Dichtelemente verbessern die Abdichtung und bewahren die Dichtscheibe vor Überbeanspruchungen und somit vor Beschädigungen und übermäßigem Verschleiß und auch vor einem Flattern beim Reinigen durch Ausblasen.

Zum einen wird die Abdichtung verbessert, weil das Dichtsystem direkt zwischen dem Innen- und Außenring des Wälzlagers wirksam ist und deshalb weitere Fugen, durch die insbesondere unter Berücksichtigung nicht zu vermeidender Toleranzen Schmutz eindringen kann, vermieden sind. Außerdem wird trotz einer bei einer Weiterbildung geringfügig vergrößerten Bauweise des Wälzlagers eine insgesamt kleinere Bauweise erreicht, weil das Dichtsystem in den vorderseitig vor den Wälzkörpern im Wälzlager vorhandenen Freiraum integriert ist. Ein weiterer Vorteil der erfindungsgemäßen Lösung besteht in einer wesentlichen Vereinfachung der Montage- bzw. Demontage, weil das Dichtsystem wenigstens teilweise bei der Montage bzw. Demontage des Wälzlagers selbsttätig montiert bzw. demontiert wird. Es wird auch die Fertigung des Dichtsystems wesentlich einfacher und preiswerter, weil das Wälzlager mit dem Dichtsystem bzw. den ihm zugeordneten Teilen des Dichtsystem vorgefertigt und gelagert sowie gehandhabt werden kann.

Das erfindungsgemäße Dichtsystem umfaßt drei axial hintereinander angeordnete Dichtscheiben oder Dichtelemente, wobei das vorderste Dichtelement eine Dichtscheibe ist und vorzugsweise durch eine Filzscheibe gebildet sein kann.

Dabei ist die vorderste Dichtscheibe mit ihrem Innenrandbereich vor dem Innenring angeordnet, liegt an dessen Frontseite gleitend an und sitzt gleitend auf der Umfangsfläche des den Innenring lagernden Lagerzapfens. Diese vorderste Dichtscheibe bewirkt somit eine gewisse Vorfilterung und ermöglicht zusammen mit den weiteren Komponenten des Dichtsystems eine besonders gute Abdichtung des Wälzlagers.

In den Unteransprüchen sind Merkmale enthalten, die die Abdichtung weiter verbessern, eine geringe Reibung und einen geringen Verschleiß sowie geringe Betriebstemperaturen gewährleisten und zu einfachen und kostengünstig herstellbaren Ausgestaltungen führen.

Nachfolgend werden die Erfindung und weitere durch sie erzielbare Vorteile anhand bevorzugter Ausführungsbeispiele und einer Zeichnung näher erläutert. Es zeigt
- Fig. 1: ein erfindungsgemäßes Handstück in der Seitenansicht;
- Fig. 2: die vordere Hälfte des Handstücks im axialen Schnitt;
- Fig. 3: ein Innengehäuse des Handstücks in der Draufsicht;
- Fig. 4: eine in Fig. 2 mit X gekennzeichnete Lager-Dichtung im Längsschnitt in vergrößerter Darstellung;
- Fig. 5: Handstück gemäß Stand der Technik.

Das stabförmige, gerade Handstück 101 besteht aus einem hinteren Motorteil 102 mit einem darin eingebauten, insbesondere elektrischen Antriebsmotor 103 und einem vorderen Handstuckteil 104, in das von vorne ein Bearbeitungswerkzeug mit seinem Schaft 105 einspannbar ist. Hierzu dient eine koaxial im Handstückteil 104 angeordnete, hülsenförmige, geschlitzte Spannzange 106, die Teil einer Antriebswelle 107 ist. die koaxial im Handstückteil 104 drehbar gelagert ist und mit dem Antriebsmotor 103 zu ihrer Rotation verbunden ist. Die Spannzange 106 läßt sich durch eine Relatiwerdrehung zwischen dem Motorteil 102 und einer Griffhülse 104a des Handstückteils 104 öffnen und schließen. Hierzu ist in das Handstückteil 104 ein Betätigungsmechanismus 108 integriert, der zwischen der Griffhülse 104a und der Antriebswelle 107 wirksam ist und ein Getriebe 109 aufweist, das die Drehbewegung der Griffhülse 104a in eine Axialbewegung einer runden Anzugstange 110 umwandelt, die sich von hinten koaxial durch eine Lagerhülse 107a der Antriebswelle 107 erstreckt, darin axial beweglich in einer Bohrung gelagert ist und mit ihrem vorderen Ende in ein Innengewinde 106a der Spannzange 106 eingeschraubt ist. Die Griffhülse 104a ist auf einem hülsenförmigen Innengehäuse 111 um die Längsmittelachse 112 des Handstücks 101 drehbar und längs verschiebbar gelagert. Im Innengehäuse 111 ist die Antriebswelle 107 mittels zwei einen axialen Abstand voneinander aufweisenden Wälzlagern 113, 114 drehbar gelagert. Das Motorteil 102 ist durch ein Kabel 102a und evtl. ein Anschlußteil 102b an eine Energie-Versorgungsquelle, hier eine Stromquelle, und/oder ein Steuergerät anschließbar.

Das Getriebe 109 weist eine radiale Schraube 117 auf, die ein radiales Loch in der Griffhülse 104a und mit einer Rolle 118 eine im Innengehäuse 111 in Umfangsrichtung schräg verlaufende Nut 119 durchfaßt und in ein Druckstück 121 eingeschraubt ist, das im hinteren Endbereich des hohlzylindrischen Innengehäuses 111 axial verschiebbar mit Bewegungsspiel sitzt und in einem mittleren Innenring 122 ein zentrales Loch 123 aufweist, durch das hindurch die Antriebswelle 107 mit einem Steck-Verbindungsabschnitt 124 ragt, der durch eine Steckkupplung 125 mit einem Antriebszapfen 126 des Antriebsmotors 103 verbunden ist. Fig. 3 zeigt das Innengehäuse 111 mit der Nut 119 in der Draufsicht.

Das Motorteil 102 weist ebenfalls ein Innengehäuse 127 auf, in dem der Antriebsmotor 103 angeordnet ist und mit dem es auf das hintere Ende des Innengehäuses 111 des Handstückteils 104 bei 128 aufgeschraubt ist.

Die Griffhülse 104a besteht aus einer Trägerhülse 104b aus Metall und einer auf deren Außenmantelfläche befestigten Umhüllung 104c aus griffigem und/oder weichelastischem und/oder wärmeisolierendem Material, z.B. Gummi oder Kunststoff, die aufgezogen, angeformt oder aufgespritzt sein kann. Am vorderen Ende schließt die Umhüllung 104c mit der Trägerhülse 104b an einer radialen Stirnfläche 104d ab. Das hintere Ende der Umhüllung 104c überragt die Trägerhülse 104b, wobei diese Verlängerung vorzugsweise auf dem vorderen Endbereich des hohlzylindrischen Gehäuses 127 des Motorteils 2 drehbar gelagert ist. Vorzugsweise ist auch das Gehäuse 127 mit einer der Umhüllung 104c entsprechenden Umhüllung 127a versehen.

Der Steck-Verbindungsabschnitt 124 ist vorzugsweise eine auf das hintere Ende der Anzugstange 110 aufgesteckte und z.B. durch einen Querstift befestigte Hülse 124a mit einem Flansch 124b an ihrem vorderen Ende, der an einer nach hinten weisenden Schulter der Anzugstange 110 anliegt und mit dem der einen nach hinten gerichteten Abstand davon aufweisende Innenring 122 zusammenwirkt.

Zwischen der Anzugstange 110 und der Lagerhülse 107a besteht eine Drehmitnahmeverbindung 135, die durch einen Querstift in der Anzugstange 110 gebildet ist, dessen Enden in einen rückseitigen offenen axialen Schlitz S im hinteren Endbereich der Lagerhülse 107a eingreifen.

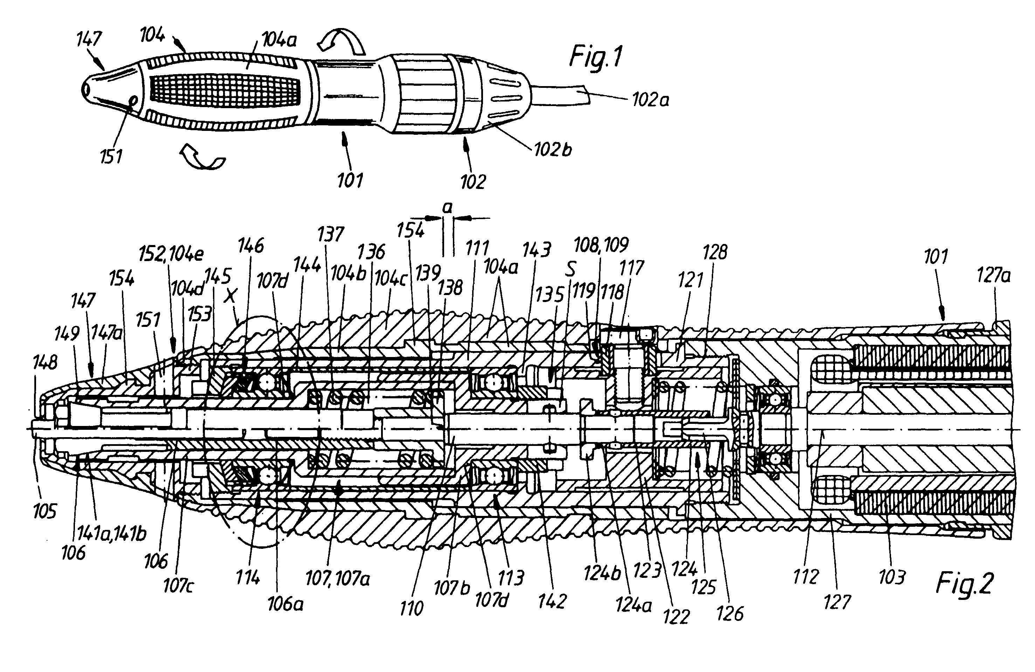

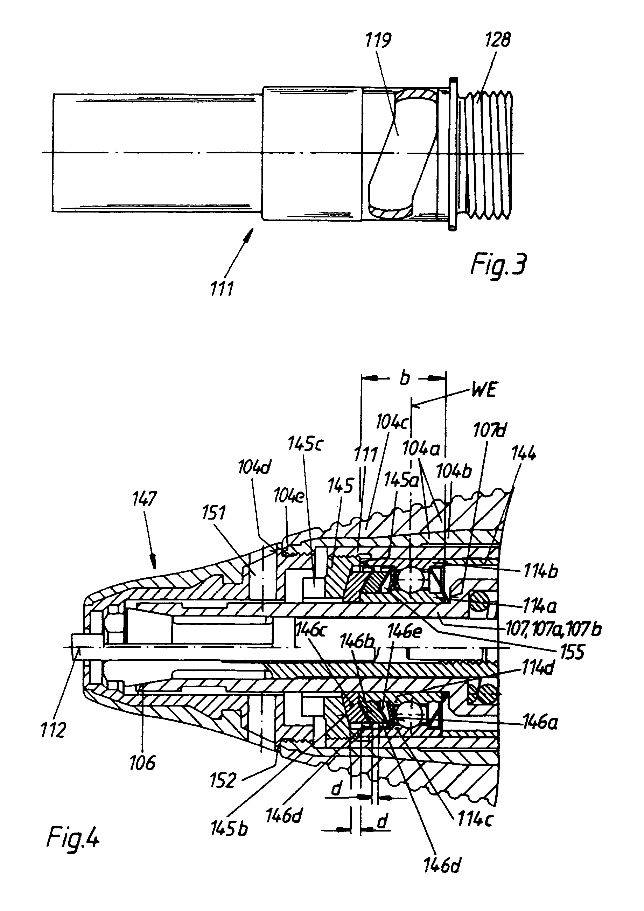

Die Lagerhülse 107a besteht aus einem hinteren Lagerhülsenteil 107b und einem vorderen Lagerhülsenteil 107c, die an ihren einander zugewandten Endbereichen topfförmig ausgebildet sind, wobei sie sich in diesen Bereichen überlappen und fest miteinander verbunden sind, z.B. fest zusammengepreßt sind. Hierdurch ist ein den hinteren Endbereich der Spannzange 6 und den vorderen Endbereich der Anzugstange 110 umgebender Ringfreiraum 136 geschaffen, in dem eine Spannfeder 137 in Form einer gewendelten Druckfeder angeordnet ist, deren vorderes Ende an einer Innenschulter des vorderen Lagerhülsenteils 107c abgestützt ist und deren hinteres Ende nach hinten gegen eine Flanschhülse 138 drückt, die fest auf der Anzugstange 110 sitzt und beim vorliegenden Ausführungsbeispiel zwischen dem hinteren Ende der hülsenförmigen Spannzange 106 und einer Schulter 139 der Anzugstange 110 verschraubt ist. An ihrem vorderen Ende weist die Lagerhülse 107a eine Innenkonusfläche 141a auf, die nach vorne divergiert, und gegen die eine Außenkonusfläche 141b der an sich bekannten Spannzange 106 durch die Spannfeder 137 gespannt ist. In der Spannstellung gemäß Fig. 2 besteht zwischen der Flanschhülse 138 und dem hinteren Lagerhülsenteil 107c ein Abstand a, wodurch das Spannen aufgrund der Kraft der Spannfeder 137 gewährleistet ist.

Eines der beiden Lager 113, 114 ist als Festlager und das andere als Loslager ausgebildet. Bei der vorliegenden Ausgestaltung ist das hintere Wälzlager 113 ein Festlager. Sein Innenring ist auf einem rückseitigen Lagerzapfen des hinteren Lagerhülsenteils 107c angeordnet und er ist zwischen einer nach hinten weisenden Schulter 107d und einem auf den Lagerzapfen aufgeschraubten Schraubring 142 eingespannt. Der Außenring des Wälzlagers 113 liegt mit seiner hinteren Stirnfläche an einer Innenschulter 143 des Innengehäuses 111 an, wobei zwischen den Außenringen beider Wälzlager 113, 114 eine Distanzhülse 144 angeordnet ist, die mit Bewegungsspiel in dem Innengehäuse 111 sitzt. Die Länge der Distanzhülse 144 ist so groß bemessen, daß der Innenring des vorderen Wälzlagers 114 einen geringen Abstand von einer nach vorne gerichteten Schulterfläche 107d des vorderen Lagerhülsenteils 107b aufweist, wobei vorzugsweise dazwischen eine Ringfeder angeordnet sein kann. Dabei ist der Außenring des vorderen Wälzlagers 114 durch einen in das vordere Ende des Innengehäuses 111 eingeschraubten Schraubring 145 mittels der Distanzhülse 144 und des Außenrings des Wälzlagers 113 gegen die Innenschulter 143 geschraubt. Zwischen dem Schraubring 145 und dem vorderen Wälzlager 114 ist eine Ringdichtung 146 zur Abdichtung des Wälzlagers 114 vorgesehen, die vorzugsweise wenigstens teilweise eine Baueinheit mit dem Walzlager 114 bildet. Einzelheiten dieser Ringdichtung 146 werden weiter unten noch beschrieben.

Die bei der vorliegenden Ausgestaltung ein Außengehäuse bildende Griffhülse 104a ist frontseitig durch eine Frontkappe 147 mit einem mittigen Durchgangsloch 148 für das Werkzeug bzw. dessen Schaft 105 abgedeckt. Vorzugsweise überragen die Antriebswelle 107 bzw. das vordere Lagerhülsenteil 107c das Innengehäuse 111 und die Griffhülse 104a nach vorne, und die Frontkappe 147 weist eine domförmige Querschnittsform auf, wodurch sich eine kegel- bzw. kegelstumpfförmige Form für das Handstück an seinem vorderen Ende ergibt. Zwischen der Frontkappe 147 und dem vorderen Endbereich der Spannzange 106 sowie der Antriebswelle 107 ist ein zwangsläufig erforderlicher Spalt 149 vorhanden, der sich bis zum Schraubring 145 bzw. zur Ringdichtung 146 hin erstreckt. Um die Reinigungswirkung dieses Spaltes durch Ausblasen von vorne zu verbessern und gleichzeitig die Gefahr zu verringern, daß der Staub in die Ringdichtung 146 eindringt, sind wenigstens ein oder mehrere, bei der vorliegenden Ausgestaltung zwei einander gegenüberliegende radial vom Spalt 149 ausgehende Durchgangslöcher 151 in der Frontkappe 147 vorgesehen, durch die die Druckluft und der Staub heim Ausblasen entweichen können.

Die Frontkappe 147 ist mit der Trägerhülse 104b verschraubt. Vorzugsweise ist hierzu am hinteren Ende der Frontkappe 147 ein sich von einer radialen Ringschulter 152 nach hinten erstreckender Ansatz 153 vorzugsweise ringförmiger Form und mit Außengewinde vorgesehen, mit dem die Frontkappe 147 in ein entsprechendes Innengewinde 104d am vorderen Ende der Trägerhülse 104b eingeschraubt ist, wobei die Ringschulter 152 gegen die vordere Stirnfläche 104e der Trägerhülse 104b geschraubt ist, wodurch ein Schraubanschlag gebildet ist. Vorzugsweise ist auch die Frontkappe 147 mit einer der Umhüllung 104c entsprechenden Umhüllung 147a versehen. Wie bereits bei der Umhüllung 104c sind auch zwischen der Frontkappe 147 und der Umhüllung 147a durch Vorsprünge und/oder Vertiefungen gebildete Formschlußverbindungen 154 zur Sicherung der jeweiligen Umhüllung auf dem sie tragenden Körper vorgesehen.

Die Ringdichtung 146 besteht aus wenigstens zwei, vorzugsweise drei Dichtscheiben 146a, 146b, 146c, die vorzugsweise im Sinne eines Dichtspakets zusammengesetzt sind bzw. längs der Mittelachse 112 aneinanderliegen und in das vordere Wälzlager 114 außen bzw. vorderseitig integriert sind. Die Breite b des Wälzlagers 114 ist größer bemessen als die übliche Normbreite dieses Typs, wobei der Außen-und Innenring gleichermaßen nach vorne hin verlängert ist, so daß die Wälzkörper, hier Kugeln, bzw. die Wälzlagerebene WE exzentrisch, d.h. nach hinten versetzt, außermittig angeordnet sind. Hierdurch ist zwischen dem Außenring und Innenring vorderseitig von den Wälzkörpern ein freier Ringraum 155 geschaffen, in dem wenigstens die beiden ersten Dichtscheiben 146a, 146b oder auch die dritte Dichtscheibe 146c angeordnet sind. Bei der vorliegenden Ausgestaltung sitzen die beiden ersten Dichtscheiben 146a, 146b im Ringraum 155, und die dritte, d.h. die vorderste Dichtscheibe 146c mit ihrem Außenumfangsbereich ganz oder teilweise im Ringraum 155 und mit ihrem Innenumfangsbereich außerhalb des Ringraums 155, wobei sie den den Innenring des Wälzlagers 114 tragenden hülsenförmigen Abschnitt des Lagerhülsenteils 107c umgreift und vorzugsweise an der vorderen Stirnfläche des Innenrings 114a anliegt.

Bei der vorliegenden Ausgestaltung sind die Dichtscheiben 146a, 146b, 146c am Außenring 114b gehalten, insbesondere bei gegenseitiger axialer Abstützung gegen eine Schulter 114c des Außenrings gedrückt, vorzugsweise durch den Schraubring 145, der seitlich von vorne gegen die jeweils vorderste Dichtscheibe, hier 146c, drückt.

Die erste bzw. hinterste Dichtscheibe 146a ist eine dünne, vorzugsweise flache Scheibe aus elastisch biegbaren Material, insbesondere Kunststoff, vorzugsweise Teflon. Die Dicke der Scheibe beträgt wenige Zehntelmillimeter, vorzugsweise etwa 0,15 mm. Sie liegt mit ihrem äußeren Randbereich an der Innenschulter 114c an, wobei sie so groß bemessen ist, daß sie mit geringem Bewegungsspiel in den Außenring 114b einschiebbar ist. Radial gegenüberliegend ist am Innenring 114a eine Schulter 114d angeordnet, an der die erste Dichtscheibe 146a mit ihrem inneren Randbereich anliegt. Die Schulter 114d ist bezüglich der Schulter 114c geringfügig axial nach vorne versetzt, und zwar um vorzugsweise etwa 0,05 mm. Aufgrund dieses Versatzes wird die bei der vorliegenden Ausgestaltung ebene erste Dichtscheibe 146a in der Montagestellung innen axial ausgebogen, wobei sie mit einer leichten axialen, nach hinten gerichteten elastischen Spannung an der Schulter 114d anliegt. Hierdurch ist eine hervorragende Abdichtung der Wälzkörper geschaffen, die auch beim Vorhandensein kaum zu vermeidender Herstellungstoleranzen eine sichere Abdichtung gewährleistet, weil die erste Dichtscheibe 146a aufgrund ihrer ausgebogenen und elastisch vorgespannten Stellung und den dadurch vorgegebenen Federweg immer an der Dichtfläche, nämlich an der Schulter 114d gleitend anliegt. Der Innendurchmesser der ersten Dichtscheibe 146a kann so groß bemessen sein, daß ihre Innenfläche einen geringen radialen Abstand von der zylindrischen Fläche des Innenrings 114a aufweist oder die Innenfläche der ersten Dichtscheibe 146a kann auch eine Dichtfunktion mit der zylindrischen Fläche des Innenrings 114a ausüben, wenn nur ein geringes Bewegungsspiel dazwischen vorhanden ist.

Besonders gute Dichtergebnisse werden erzielt, wenn die erste Dichtscheibe 146a aus einem faser - oder gewebeverstärkten Kunststoff, insbesondere Teflon, besteht.

Die zweite und vorzugsweise auch die dritte Dichtscheibe 146b, 146c ist jeweils vorzugsweise ein Filzring oder eine Filzscheibe, von denen beide oder nur die zweite auf dem Innenring 114a dichtend gleiten, wobei die dritte Dichtscheibe 146c auf der vorderen Lagerhülse 107c gleiten kann, wie es bereits beschrieben worden ist. Vorzugsweise ist der zweiten und der dritten Dichtscheibe 146b, 146c jeweils ein Stabilisatorring 146d zugeordnet, an dem die zugehörige Dichtscheibe axial anliegen oder auch befestigt sein kann, z.B. durch Kleben. Die einander gleichen Stabilisatorringe 146d bestehen jeweils aus einem hohlzylindrischen Haltering, von dem sich insbesondere an dessen hinterem Ende ein Innerflansch 146e radial einwärts erstreckt, der vorzugsweise hohlkegelförmig geformt ist, wobei seine Kegelfläche insbesondere nach vorne konvergiert. An dieser tellerfederförmigen Form liegt die zugehörige Dichtscheibe an, vorzugsweise an der Vorderseite des Innenflansches 146e. Die axiale Breite der Halteringe bzw. die axiale Dicke der zweiten bzw. dritten Dichtscheibe 146b, 146c ist jeweils so groß bemessen, daß in der Montagestellung zwischen den Halteringen bzw. zwischen dem vordersten Haltering und dem Schraubring 145 jeweils ein Abstand d besteht. Hierdurch kann durch den Schraubring 145 ein axialer Druck auf den zweiten bzw. dritten Dichtring 146b, 146c ausgeübt werden. Vorzugsweise ist die Anordnung so getroffen, daß ein vorbestimmter axialer Druck dann erreicht wird, wenn der Schraubring 145 an einem Schraubanschlag 145a anliegt, der bei der vorliegenden Ausgestaltung durch das vordere Ende des Außenring 114b gebildet ist.

Bei der vorliegenden Ausgestaltung ist zwischen dem Außenumfang der Dichtscheiben 146b, 146c und dem Außenring 114b ein kleiner radialer Abstand vorgesehen, in den der Haltering des zugehörigen Stabilisatorrings 146d hineinragt.

Die Innenabmessung des Schraubringes 145 ist vorzugsweise nur geringfügig größer bemessen als die ihn durchragende Lagerhülse 107c, so daß der Schraubring 145 mit seiner nach hinten gerichteten Druckfläche 145b die an ihr anliegende Dichtscheibe 146c möglichst großflächig und insbesondere auch an ihrem Innenrand zu stützen vermag. Vorzugsweise ist die Druckfläche 145b eine Hohlkegelfläche, die nach vorne konvergiert.

Bei den Stabilisatorringen 146d kann es sich um an sich bekannte Abdeckringe aus Metall oder Kunststoff handeln. Ein solcher Abdeckring ist auch an der Hinterseite des Wälzlagers 114 angeordnet.

Ein Ausbau der Antriebswelle 107 und der Wälzlager 113, 114 und der Ringdichtung 146 bzw. ein Austausch derselben erfolgt durch folgende Demontageschritte. Nach dem Abschrauben der Schraube 117 und der Frontkappe 147 braucht nur noch der Schraubring 145 mit einem in vorderseitigen Eingriffsöffnungen 145c eingreifenden Werkzeug abgeschraubt zu werden. Sofern die dritte Dichtscheibe 146c lose an den Stabilisatorring 146d angesetzt ist, kann sie entfernt werden. Dann kann die komplette Antriebswelle 107 mit den Wälzlagern 113, 114 und die dazwischen angeordnete Distanzhülse 144 nach vorne aus dem Innengehäuse 111 herausgezogen werden, was von Hand erfolgen kann, da die Innenringe der Wälzlager 113, 114 mit einer verhältnismäßig leichtgängigen Passung im Innengehäuse 111 sitzen. Das hintere Wälzlager 113 wird zwangsläufig mit der Antriebswelle 107 ausgebaut, weil es an letzterer festgelegt ist. Im ausgebauten Zustand kann von der Antriebswelle 107 handhabungsfreundlich der Schraubring 142 abgeschraubt werden. Dann kann das Wälzlager 113 und ggf. auch erst jetzt das Wälzlager 114 mit der Ringdichtung 146 handhabungsfreundlich von der Antriebswelle 107 abgezogen werden, vorzugsweise mittels zugehörigen Abziehvorrichtungen.

Diese Ausgestaltung ermöglicht es, die Wälzlager 113, 114 und/oder die Ringdichtung 146 durch den Benutzer in einfacher und schneller Weise auszutauschen. Es ist vorteilhaft, wenn der Benutzer sich jeweils einen Satz Wälzlager und ggf. auch eine Ringdichtung 146 als Vorrat lagert, so daß das Handstück betriebsseitig in kurzer Zeit wieder montiert und benutzt werden kann. Ein Einschicken des Wälzlagers an den Hersteller, wie es bei der bekannten Ausgestaltung der Fall ist, ist nicht erforderlich.

Die Montage erfolgt in umgekehrten Montageschritten. Zunächst werden die Wälzlager 113, 114 auf die Antriebswelle 107 aufgeschoben und das hintere Wälzlager 113 durch den Schraubring 142 gesichert. In dem Fall, in dem die Ringdichtung 146 wenigstens teilweise eine Baueinheit mit dem vorderen Wälzlager 114 bildet, ist gleichzeitig die Ringdichtung 146 montiert. Dann wird die so vormontierte Antriebswelleneinheit von vorne in das Innengehäuse 111 eingeschoben und durch Einschrauben des Schraubrings 145 positioniert und gesichert, wobei vorher die dritte Dichtscheibe 146c als separates Einzelteil zusätzlich montiert werden kann. Danach bedarf es lediglich noch eines Einschraubens der Frontkappe 147 und der Schraube 117.

Bei den Demontage- bzw. Montagevorgängen gestattet die Steckkupplung 124 in einfacher Weise sowohl den Aus- als auch Einbau.

Es ist vorteilhaft, die Flächen der Schulter 114d leicht schräg entsprechend der Schrägstellung der ausgebogenen ersten Dichtscheibe 146a auszubilden, so daß letztere flächig an der Schulter 114d anliegt und möglichst wenig Reibung und Verschleiß im Betrieb erzeugt wird.

## Patentansprüche

1. Motorhandstück (101) für medizinische Zwecke, vorzugsweise für ein medizinisches oder dentales Labor,
mit einer in einem hülsenförmigen Gehäuse (111) angeordneten Spannvorrichtung (106) zum wahlweisen Einspannen von vorne in das Handstück (101) einsteckbaren Werkzeugen (105),
wobei zum Öffnen und Schließen der Spannvorrichtung (106) ein am Umfang des Handstücks (101) zugängliches und beweglich gelagertes Betätigungsteil (104a) vorgesehen ist,
wobei die Spannvorrichtung (106) an einer Antriebswelle (107) angeordnet ist, die mittels einem hinteren und einem vorderen Wälzlager (113, 114) drehbar im Gehäuse (101) gelagert ist,
wobei das Betätigungsteil (104a) durch einen Betätigungsmechanismus (108) mit der Spannvorrichtung (106) verbunden ist, und
wobei dem vorderen Wälzlager (114) vorderseitig von dessen Wälzkörpern ein Dichtsystem (146) zugeordnet ist, das wenigstens eine Dichtscheibe (146a) aufweist, die zwischen dem Innen- und Außenring (114a, 114b) wirksam ist,
**dadurch gekennzeichnet,**
**daß** der Dichtscheibe (146a) zwei weitere Dichtelemente (146b, 146c) vorgeordnet sind, von denen das der Dichtscheibe (146a) benachbarte Dichtelement (146b) mit dem Innen- und Außenring (114a, 114b) des Wälzlagers (114) zusammenwirkt,
wobei das vorderste der weiteren Dichtelemente eine Dichtscheibe (146c) ist, die mit ihrem Innenrandbereich vor dem Innenring (114a) angeordnet ist, an dessen Frontseite gleitend anliegt und auf der Umfangsfläche des den Innenring (114) lagernden Lagerzapfens (107c) gleitend sitzt.

2. Motorhandstück nach Anspruch 1,
**dadurch gekennzeichnet,**
**daß** das der Dichtscheibe (146a) benachbarte Dichtelement (146b) zwischen dem Innen-und Außenring (114a, 114b) integriert ist.

3. Motorhandstück nach Anspruch 1 oder 2,
**dadurch gekennzeichnet,**
**daß** das Wälzlager (114) breiter ausgebildet ist als ein zugehöriger üblicher Typ oder Normtyp.

4. Motorhandstück nach einem der vorhergehenden Ansprüche,
**dadurch gekennzeichnet,**
**daß** die Dichtscheibe (146a) an einer Schulter (114c) des Außenrings (114b) und an einer Schulter (114d) des Innenrings (114a) anliegt und mittelbar oder unmittelbar durch eine lösbare Arretierschulter (145) arretiert ist vorzugsweise an der Schulter (114c) des Außenrings (114b).

5. Motorhandstück nach einem der vorhergehenden Ansprüche,
**dadurch gekennzeichnet.**
**daß** im radial inneren Bereich der Dichtscheibe (146a) ein freier Ringraum (155) zwischen letzterer und den benachbarten weiteren Dichtelementen (146b) vorhanden ist.

6. Motorhandstück nach Anspruch 4 oder 5,
**dadurch gekennzeichnet,**
**daß** die Dichtscheibe (146a) gegen die Schulter (114c) des Außenrings (114b) vorgespannt ist.

7. Motorhandstück nach einem der vorhergehenden Ansprüche,
**dadurch gekennzeichnet,**
**daß** die Dichtscheibe (146a) aus biegeelastischem Material besteht.

8. Motorhandstück nach einem der vorhergehenden Ansprüche,
**dadurch gekennzeichnet,**
**daß** die Dichtscheibe (146a) aus Kunststoff, insbesondere faser- oder gewebeverstärktem Kunststoff und/oder aus Teflon besteht.

9. Motorhandstück nach einem der vorhergehenden Ansprüche,
**dadurch gekennzeichnet,**
**daß** die Dicke der Dichtscheibe (146a) 0,1 bis 0,5 mm, vorzugsweise etwa 0,15 mm beträgt.

10. Motorhandstück nach einem der Ansprüche 4 bis 9,
**dadurch gekennzeichnet,**
**daß** die Dichtscheibe (146a) mit einer geringen Vorspannung an der Schulter (114d) des Innenrings (114a) anliegt.

11. Motorhandstück nach einem der Ansprüche 4 bis 10,
**dadurch gekennzeichnet,**
**daß** die Schultern (114c, 114d) relativ zueinander geringfügig axial versetzt sind.

12. Motorhandstück nach einem der vorhergehenden Ansprüche,
**dadurch gekennzeichnet,**
**daß** das der Dichtscheibe (146a) benachbarte Dichtelement eine Dichtscheibe (146b) oder Fettkammer bzw. Fettschicht ist.

13. Motorhandstück nach Anspruch 1 oder 12,
**dadurch gekennzeichnet,**
**daß** die Dichtscheibe oder Dichtscheiben (146b, 146c) aus einem komprimierbaren Material besteht bzw. bestehen.

14. Motorhandstück nach Anspruch 13,
**dadurch gekennzeichnet,**
**daß** die Dichtscheibe oder Dichtscheiben (146b, 146c) aus faserförmigem Material besteht.

15. Motorhandstück nach Anspruch 14,
**dadurch gekennzeichnet,**
**daß** das faserförmige Material Fett enthält.

16. Motorhandstück nach einem der vorhergehenden Ansprüche.
**dadurch gekennzeichnet,**
**daß** die Dichtscheiben (146a, 146b, 146c) gegen die Schulter (114c) des Außenrings (114b) vorgespannt sind, vorzugsweise mittels eines Schraubelementes (145).

17. Motorhandstück nach einem der vorhergehenden Ansprüche,
**dadurch gekennzeichnet.**
**daß** zwischen den Dichtscheiben (146a, 146b, 146c) Stabilisatorscheiben (146d) angeordnet sind, die in den Außenring (114b) fest eingesetzt sind, an ihrem
Innenrand ein Bewegungsspiel zum Innenring (114a) aufweisen und vorzugsweise eine nach vorne ausgebauchte oder kegelförmige Form aufweisen.

18. Motorhandstück nach Anspruch 17,
**dadurch gekennzeichnet,**
**daß** zwischen dem Außenumfang der zweiten und ggf. auch dritten Dichtscheibe (146b, 146c) und dem Außenring (114b) ein Ringabstand vorgesehen ist, in den der oder die Stabilisatorring(e) (146d) mit einem hohlzylidrischen Abschnitt hineinragen.

19. Motorhandstück nach einem der vorhergehenden Ansprüche.
**dadurch gekennzeichnet,**
**daß** von einem von einer Einsteckörffnung für das Werkzeug (105) ausgehenden, die Spannvorrichtung (106) umgebenden Ringkanal (149) wenigstens ein Durchgangskanal (151) zum Umfang des Handstückes hin ausmündet, der vorzugsweise in einem verhältnismäßig geringen Abstand vor dem vorderen Wälzlager (114) angeordnet ist.

## Claims

1. Motor-operated tool holder (101) for medical purposes, preferably for a medical or dental laboratory,
having a clamping device (106) disposed in a sleeve-shaped housing (111) for the selective clamping of tools (105) insertable from the front into the tool holder (101),
wherein an operating part (104a) accessible at, and movably supported on the periphery of the tool holder (101) is provided for opening and closing the clamping device (106),
wherein the clamping device (106) is disposed on a drive shaft (107), which is rotatably supported in the housing (101) by means of a rear and a front rolling-contact bearing (113, 114),
wherein the operating part (104a) is connected by an operating mechanism (108) to the clamping device (106), and
wherein associated with the front rolling-contact bearing (114) at the front of the latter's rolling bodies is a sealing system (146) comprising at least one sealing washer (146a), which is effective between the inner and outer raceway (114a, 114b),
**characterized in**
**that** disposed in front of the sealing washer (146a) are two further sealing elements (146b, 146c), of which the sealing element (146b) adjacent to the sealing washer (146a) cooperates with the inner and outer raceway (114a, 114b) of the rolling-contact bearing (114),
wherein the frontmost of the further sealing elements is a sealing washer (146c), which is disposed with its inner edge region in front of the inner raceway (114a), rests slidingly against the latter's front side and is seated slidingly on the peripheral surface of the bearing journal (107c), which supports the inner raceway (114).

2. Motor-operated tool holder according to claim 1,
**characterized in**
**that** the sealing element (146b) adjacent to the sealing washer (146a) is integrated between the inner and outer raceway (114a, 114b).

3. Motor-operated tool holder according to claim 1 or 2,
**characterized in**
**that** the rolling-contact bearing (114) is designed so as to be wider than an appropriate conventional type or standard type.

4. Motor-operated tool holder according to one of the preceding claims,
**characterized in**
**that** the sealing washer (146a) rests against a shoulder (114c) of the outer raceway (114b) and against a shoulder (114d) of the inner raceway (114a) and is arrested indirectly or directly by a releasable arresting shoulder (145) preferably at the shoulder (114c) of the outer raceway (114b).

5. Motor-operated tool holder according to one of the preceding claims,
**characterized in**
**that** in the radially inner region of the sealing washer (146a) there is a free annular space (155) between the latter and the adjacent further sealing elements (146b).

6. Motor-operated tool holder according to claim 4 or 5,
**characterized in**
**that** the sealing washer (146a) is preloaded towards the shoulder (114c) of the outer raceway (114b).

7. Motor-operated tool holder according to one of the preceding claims,
**characterized in**
**that** the sealing washer (146a) is made of flexible material.

8. Motor-operated tool holder according to one of the preceding claims,
**characterized in**
**that** the sealing washer (146a) is made of plastic material, in particular of fibre- or fabric-reinforced plastic material and/or of Teflon.

9. Motor-operated tool holder according to one of the preceding claims,
**characterized in**
**that** the thickness of the sealing washer (146a) is 0.1 to 0.5 mm, preferably around 0.15 mm.

10. Motor-operated tool holder according to one of claims 4 to 9,
**characterized in**
**that** the sealing washer (146a) rests with a slight preloading against the shoulder (114d) of the inner raceway (114a).

11. Motor-operated tool holder according to one of claims 4 to 10,
**characterized in**
**that** the shoulders (114c, 114d) are slightly axially offset relative to one another.

12. Motor-operated tool holder according to one of the preceding claims,
**characterized in**
**that** the sealing element adjacent to the sealing washer (146a) is a sealing washer (146b) or grease chamber and/or grease layer.

13. Motor-operated tool holder according to claim 1 or 12,
**characterized in**
**that** the sealing washer or sealing washers (146b, 146c) is or are made of a compressible material.

14. Motor-operated tool holder according to claim 13,
**characterized in**
**that** the sealing washer or sealing washers (146b, 146c) is made of fibrous material.

15. Motor-operated tool holder according to claim 14,
**characterized in**
**that** the fibrous material contains grease.

16. Motor-operated tool holder according to one of the preceding claims,
**characterized in**
**that** the sealing washers (146a, 146b, 146c) are preloaded towards the shoulder (114c) of the outer raceway (114b), preferably by means of a screw element (145).

17. Motor-operated tool holder according to one of the preceding claims,
**characterized in**
**that** disposed between the sealing washers (146a, 146b, 146c) are stabilizing discs (146d), which are inserted firmly into the outer raceway (114b), have at their inner edge a motional clearance relative to the inner raceway (114a) and are preferably of a shape which is bellied in a forward direction or conical.

18. Motor-operated tool holder according to claim 17,
**characterized in**
**that** provided between the outer periphery of the second and optionally also of the third sealing washer (146b, 146c) and the outer raceway (114b) is an annular gap, into which the stabilizing ring or stabilizing rings (146d) project with a hollow-cylindrical portion.

19. Motor-operated tool holder according to one of the preceding claims,
**characterized in**
**that** from an annular channel (149) emanating from an insertion opening for the tool (105) and surrounding the clamping device (106) at least one through-channel (151), which is preferably disposed a relatively slight distance in front of the front rolling-contact bearing (114), opens out towards the periphery of the tool holder.

## Revendications

1. Pièce à main motorisée (101) utilisée à des fins médicales, de préférence pour un laboratoire médical ou dentaire, comprenant un dispositif de serrage (106) disposé dans un corps (111) en forme de douille pour la fixation sélective d'outils (105) pouvant être enfichés de l'avant dans la pièce à main (101), une partie d'actionnement (104a) montée de façon accessible et mobile sur le pourtour de la pièce à main (101) étant prévue pour l'ouverture et la fermeture du dispositif de serrage (106), le dispositif de serrage (106) étant disposé sur un arbre d'entraînement (107) monté en rotation dans le corps (101) par un roulement arrière (113) et un roulement avant (114), la partie d'actionnement (104) étant reliée au dispositif de serrage (106) par un mécanisme d'actionnement (108), et un système d'étanchéité (146) étant associé au roulement avant (114) en avant des éléments roulants de ce roulement, ce système présentant au moins une rondelle d'étanchéité (146a) agissant entre les bagues intérieure et extérieure, (114a, 114b),
**caractérisée par le fait**
**que** la rondelle d'étanchéité (146a) est précédée d'au moins deux éléments d'étanchéité supplémentaires (146b, 146c) parmi lesquels au moins l'élément d'étanchéité (146b) voisin de la rondelle d'étanchéité (146a) coopère avec les bagues intérieure et extérieure (114a, 114b) du roulement (114), l'élément d'étanchéité le plus en avant parmi les éléments d'étanchéité supplémentaires étant une rondelle d'étanchéité (146c) dont le bord intérieur est disposé en avant de la bague intérieure (114a), est appliqué à glissement contre le côté frontal de cette dernière et est monté à glissement sur la surface périphérique de l'embout de montage ou tourillon (107c) portant la bague intérieure (114a).

2. Pièce à main motorisée suivant la revendication 1,
**caractérisée par le fait**
**que** l'élément d'étanchéité (146b, voisin de la rondelle d'étanchéité (146a) est intégré entre les bagues intérieure et extérieure (114a, 114b).

3. Pièce à main motorisée suivant la revendication 1 ou 2,
**caractérisée par le fait**
**que** le roulement (114) est plus large qu'un roulement correspondant de type usuel ou normalisé.

4. Pièce à main motorisée suivant l'une des revendications précédentes,
**caractérisée par le fait**
**que** la rondelle d'étanchéité (146a) est appliquée contre un épaulement (114c) de la bague extérieure (114b) et contre un épaulement (114d) de la bague intérieure (114a) et est positionnée directement ou indirectement par un épaulement de positionnement (145) amovible de préférence sur l'épaulement (114c) de la bague extérieure (114b).

5. Pièce à main motorisée suivant l'une des revendications précédentes,
**caractérisée par le fait**
**qu'**un espace annulaire libre (155) est prévu dans la zone radialement intérieure de la rondelle d'étanchéité (146a) entre cette dernière et les éléments d'étanchéité supplémentaires voisins (146b).

6. Pièce à main motorisée suivant la revendication 4 ou 5,
**caractérisée par le fait**
**que** la rondelle d'étanchéité (146a) est précontrainte contre l'épaulement (114c) de la bague extérieure (114b).

7. Pièce à main motorisée suivant l'une des revendications précédentes,
**caractérisée par le fait**
**que** la rondelle d'étanchéité (146a) est constituée par un matériau élastique en flexion.

8. Pièce à main motorisée suivant l'une des revendications précédentes,
**caractérisée par le fait**
**que** la rondelle d'étanchéité (146a) est constituée de matière plastique, en particulier de matière plastique renforcée de fibres ou de tissu et/ou de Téflon.

9. Pièce à main motorisée suivant l'une des revendications précédentes,
**caractérisée par le fait**
**que** la rondelle d'étanchéité (146a) présente une épaisseur comprise entre 0,1 et 0,5 mm, de préférence une épaisseur d'environ 0,15 mm.

10. Pièce à main motorisée suivant l'une des revendications 4 à 9,
**caractérisée par le fait**
**que** la rondelle d'étanchéité (146a) est appliquée avec une légère précontrainte contre l'épaulement (114d) de la bague intérieure (114a).

11. Pièce à main motorisée suivant l'une des revendications 4 à 10,
**caractérisée par le fait**
**que** les épaulements (114c, 114d) sont légèrement décalés axialement l'un par rapport à l'autre.

12. Pièce à main motorisée suivant l'une des revendications précédentes,
**caractérisée par le fait**
**que** l'élément d'étanchéité voisin de la rondelle d'étanchéité (146a) est constitué par une rondelle d'étanchéité (146b) ou une chambre à graisse ou couche de graisse.

13. Pièce à main motorisée suivant la revendication 1 ou 12,
**caractérisée par le fait**
**que** la ou les rondelles d'étanchéité (146b, 146c) est/sont constituée(s) par un matériau compressible.

14. Pièce à main motorisée suivant la revendication 13,
**caractérisée par le fait**
**que** la ou les rondelles d'étanchéité (146b, 146c) est/sont constituée(s) par un matériau fibreux.

15. Pièce à main motorisée suivant la revendication 14,
**caractérisée par le fait**
**que** le matériau fibreux contient de la graisse.

16. Pièce à main motorisée suivant l'une des revendications précédentes,
**caractérisée par le fait**
**que** les rondelles d'étanchéité (146a, 146b, 146c) sont précontrainte(s) contre l'épaulement (114c) de la bague extérieure (114b), de préférence à l'aide d'un élément à vis (145).

17. Pièce à main motorisée suivant l'une des revendications précédentes,
**caractérisée par le fait**
**qu'**entre les rondelles d'étanchéité (146a, 146b, 146c) sont disposés des anneaux stabilisateurs (146d) qui sont montés rigidement dans la bague intérieure (114b), présentent sur leur bord intérieur un jeu de mouvements par rapport à la bague intérieure (114a) et présentent de préférence une forme bombée ou conique vers l'avant.

18. Pièce à main motorisée suivant la revendication 17,
**caractérisée par le fait**
**qu'**entre le pourtour extérieur de la deuxième et le cas échéant de la troisième rondelle(s) d'étanchéité (146b, 146c) et la bague extérieure (114b), il est prévu un espace annulaire dans lequel le ou les anneaux stabilisateur(s) (146d) pénètrent par une partie en forme de cylindre creux.

19. Pièce à main motorisée suivant l'une des revendications précédentes,
**caractérisée par le fait**
**qu'**au moins un canal de passage (151) débouche vers le pourtour de la pièce à main à partir d'un canal annulaire (149) partant de l'ouverture d'insertion pour l'outil (105) et entourant le dispositif de serrage (106), ledit canal de passage étant disposé de préférence à une distance relativement faible en avant du roulement avant (114).
